**Europäisches Patentamt**

**European Patent Office**

**Office européen des brevets**

(19)

(11) Numéro de publication : **0 300 851 B1**

(12)

# FASCICULE DE BREVET EUROPEEN

(45) Date de publication du fascicule du brevet :
**26.02.92 Bulletin 92/09**

(51) Int. Cl.⁵ : **C01F 17/00**

(21) Numéro de dépôt : **88401593.4**

(22) Date de dépôt : **24.06.88**

(54) **Procédé d'obtention d'un oxyde cérique.**

(30) Priorité : **29.06.87 FR 8709122**

(43) Date de publication de la demande :
**25.01.89 Bulletin 89/04**

(45) Mention de la délivrance du brevet :
**26.02.92 Bulletin 92/09**

(84) Etats contractants désignés :
**AT BE CH DE ES FR GB GR IT LI LU NL SE**

(56) Documents cités :
**EP-A- 0 207 857
EP-A- 0 208 580
EP-A- 0 239 479
FR-A- 2 593 195**

(73) Titulaire : **RHONE-POULENC CHIMIE
25, quai Paul Doumer
F-92408 Courbevoie Cédex (FR)**

(72) Inventeur : **Le Loarer, Jean-Luc
24 rue du général Guillaumat
F-17000 La Rochelle (FR)**

(74) Mandataire : **Dutruc-Rosset, Marie-Claude et
al
RHONE-POULENC INTERSERVICES Service
Brevets Chimie 25, Quai Paul Doumer
F-92408 Courbevoie Cédex (FR)**

EP 0 300 851 B1

## Description

La présente invention est relative à un procédé d'obtention d'un oxyde cérique. Plus précisément, l'invention concerne un procédé pour accroître la surface spécifique d'un oxyde cérique et, selon une variante, pour stabiliser la surface spécifique à haute température.

L'invention fournit un oxyde cérique présentant une surface spécifique accrue et stabilisée à haute température.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER - EMMETT - TELLER décrite dans le périodique "The Journal of American Society, 60, 309 (1938)".

Il est connu que l'oxyde cérique peut être utilisé en tant que catalyseur ou support de catalyseur. On peut citer par exemple, les travaux de Paul MERIAUDEAU et Coll. relatifs à la synthèse du méthanol à partir de CO + $H_2$ sur des catalyseurs au platine déposé sur de l'oxyde cérique. (C.R. Acad. Sc. Paris t. 297 - Série II-471 - 1983).

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Lors de l'emploi prolongé d'un support de catalyseur, il se produit une diminution de la surface spécifique due à la coalescence des micropores très fins. Au cours de cette coalescence, une partie du catalyseur est englobée dans la masse du support et ne peut plus être en contact avec les réactifs.

Jusqu'à présent, la plupart des oxydes cériques préparés présentent une surface spécifique qui décroit rapidement pour des températures de fonctionnement supérieures à 500°C. Ainsi, R. ALVERO et coll. (J. Chem. Soc. Dalton Trans 1984, 87) ont obtenu à partir de cérinitrate d'ammonium, un oxyde cérique présentant après calcination à une température de 600°C, une surface spécifique de 29 m²/g.

Par ailleurs, on a décrit dans FR-A 2 559 754 un oxyde cérique présentant une surface spécifique d'au moins 85 ± 5 m²/g obtenue après calcination entre 350 et 450°C et, de préférence, située entre 100 et 130 m²/g après calcination entre 400 et 450°C. Ledit oxyde est préparé par hydrolyse d'une solution aqueuse de nitrate cérique en milieu acide nitrique, puis séparation du précipité obtenu, lavage à l'aide d'un solvant organique, éventuellement séchage, puis calcination. L'oxyde cérique obtenu présente une surface spécifique intéressante lorsqu'il est préparé dans une gamme de température de calcination allant de 300 à 600°C. Toutefois, on note une chute de la surface spécifique après calcination à une température plus haute, la surface spécifique étant de 10 m²/g, après calcination à 800°C.

On peut également citer FR-A 2 559 755 qui concerne un oxyde cérique présentant une surface spécifique d'au moins 85 ± 5 m²/g après calcination entre 350 et 500°C et, de préférence, située entre 150 et 180 m²/g après calcination entre 400 et 450°C. Cet oxyde est obtenu selon un procédé qui consiste à précipiter un sulfate basique cérique en faisant réagir une solution aqueuse de nitrate cérique et une solution aqueuse contenant des ions sulfate, à séparer le précipité obtenu, à le laver à l'aide d'une solution d'ammoniaque, éventuellement à le sécher puis à le calciner à une température variant entre 300 et 500°C. L'oxyde cérique ainsi préparé présente une grande surface spécifique, mais lorsqu'il est soumis à une opération de calcination à 800°C, sa surface spécifique décroit considérablement et se situe vers 10 m²/g.

Un des objectifs de la présente invention est de fournir un procédé qui permet d'accroître la surface spécifique d'un oxyde cérique obtenu par calcination d'un hydroxyde cérique.

Un autre objectif de l'invention est de disposer d'un procédé qui permet d'améliorer la stabilité de la surface spécifique à haute température.

Pour atteindre le premier objectif, la présente invention propose un procédé de préparation d'un oxyde cérique obtenu par calcination d'un hydroxyde cérique caractérisé par le fait que l'hydroxyde cérique est soumis à un traitement solvothermal d'autoclavage, avant l'opération de calcination.

Plus précisément, le procédé de l'invention consiste :
- à mettre l'hydroxyde cérique en suspension dans un milieu aqueux neutre ou basique
- à le chauffer dans une enceinte close jusqu'à une température et une pression inférieures respectivement à la température critique et à la pression critique dudit milieu d'autoclavage,
- à refroidir le milieu réactionnel et à le ramener à la pression atmosphèrique,
- à séparer l'hydroxyde cérique ainsi traité,
- puis à le calciner.

La demanderesse a trouvé que le fait d'effectuer un prétraitement thermique désigné par la suite par le terme "autoclavage" de l'hydroxyde cérique, avant d'effectuer l'opération de calcination, permet d'accroître la

EP 0 300 851 B1

surface spécifique de l'oxyde cérique obtenu.

Sans que l'interprétation théorique qui suit, puisse en aucun cas limiter la portée de l'invention, on pense que le traitement d'autoclavage de l'hydroxyde cérique permet une recristallisation de l'hydrate conduisant à une augmentation du taux de cristallisation et, par conséquent, à une diminution de la partie amorphe, ce qui permet d'éviter l'agrégation des cristallites entre eux lors de l'opération de calcination et ainsi d'accroître la surface spécifique de l'oxyde cérique obtenu.

Il est a noter que la calcination entraîne une augmentation de la taille des cristallites et que le traitement d'autoclavage permet de limiter cette augmentation, ce qui conduit à une meilleure stabilité de la surface spécifique.

Intervient donc dans le procédé de l'invention un hydroxyde cérique qui peut être un oxyde cérique hydraté $CeO_2, 2H_2O$ ou bien un hydroxyde cérique pouvant contenir des quantités résiduelles d'anions liés ou adsorbés.

Ainsi, l'hydroxyde cérique utilisé dans le procédé de l'invention peut répondre à la formule suivante :

$$Ce(OH)_{4-ay} (A)_y, nH_2O \qquad (I)$$

dans laquelle :

- A symbolise un anion résiduel,
- a est un nombre entier représentant la charge de l'anion,
- y est un nombre compris entre 0 et 2,
- n est un nombre compris entre 0 et environ 20.

L'hydroxyde cérique mis en oeuvre préférentiellement selon l'invention répond à la formule (I) dans laquelle a est un nombre entier inférieur ou égal à 3, de préférence égal à 1 ou 2, et y est un nombre compris entre 0 et 1,5.

A titre d'anions résiduels A, on peut citer les chlorures, sulfates, nitrates, acétates, formiates, etc... et, de préférence, les nitrates ou les chlorures.

Il y a lieu de remarquer qu'il est également possible de mettre en oeuvre dans le procédé de l'invention un hydroxyde cérique pouvant contenir une phase d'oxyde cérique. On peut donc faire appel aux composés du cérium décrits dans la demande de brevet européen 87 400 600.0, mais ceux-ci ne sont pas préférés car ils ne permettent pas de bénéficier, au maximum, des avantages apportées par la présente invention du fait de la pré-existence de la phase d'oxyde cérique, lors du traitement d'autoclavage.

Constitue une matière première de choix, un hydroxyde cérique répondant à la formule (I) et préparé selon le procédé décrit ci-après qui consiste à faire réagir une solution de sel de cérium et une base, éventuellement en présence d'un agent oxydant, à séparer le précipité obtenu, éventuellement à le laver et/ou le sécher.

La solution de sel de cérium mise en oeuvre peut être toute solution aqueuse de sel de cérium à l'état céreux et/ou cérique soluble dans les conditions de préparation, notamment une solution de chlorure céreux ou de nitrate de cérium à l'état céreux ou cérique ou un mélange d'entre eux.

La solution de sel de cérium est choisie de telle sorte qu'elle ne contienne pas d'impuretés qui puissent se retrouver dans le produit calciné. Il peut être avantageux de mettre en jeu un sel de cérium présentant un degré de pureté supérieur à 99 %.

La concentration de la solution de sel de cérium n'est pas un facteur critique, selon l'invention, et elle peut varier dans de larges limites ; une concentration comprise entre 0,2 et 4 moles par litre est préférée.

Selon une variante préférée, on introduit le cérium dans le milieu réactionnel à l'état céreux et on l'oxyde à l'état cérique avec un agent oxydant.

Parmi les agents oxydants pouvant convenir, on peut citer notamment des solutions de perchlorate, de chlorate, d'hypochlorite, de persulfate de sodium, de potassium ou d'ammonium, d'eau oxygénée ou l'air, l'oxygène, l'ozone. On utilise de préférence l'eau oxygénée.

La proportion d'agent oxydant par rapport au sel céreux à oxyder peut varier dans de larges limites. Elle est, en général, supérieure à la stoechiométrie et correspond, de préférence, à un excès compris entre 10 et 40 %.

Une autre variante préférée de l'invention consiste à faire appel à une solution aqueuse de nitrate cérique. Cette dernière présente généralement une certaine acidité initiale et peut avoir une normalité variant entre 0,01 N et 5 N. La concentration en ions $H^+$ n'est pas critique. Il est souhaitable qu'elle se situe entre 0,1 N et 1 N.

A titre de matières premières, on peut faire appel à une solution de nitrate cérique obtenue par action de l'acide nitrique sur un oxyde cérique hydraté préparé d'une manière classique, par exemple, par action de l'acide nitrique sur le carbonate céreux et addition d'une solution d'ammoniaque en présence d'un agent oxydant, de préférence, l'eau oxygénée.

La solution de nitrate cérique obtenue selon le procédé d'oxydation électrolytique d'une solution de nitrate céreux et qui est décrite dans la demande de brevet français FR-A 2 570 087 (N° 84 13641) constitue une matière première de choix.

La précipitation de l'hydroxyde cérique peut être effectuée par réaction de la solution de sel de cérium et d'une solution basique.

La solution basique mise en oeuvre peut être notamment une solution aqueuse d'ammoniaque ou d'hydroxyde de sodium, de potassium. On met en oeuvre de préférence une solution d'ammoniaque. La norma lité de la solution basique mise en oeuvre n'est pas un facteur critique selon l'invention : elle peut varier dans de larges limites, et elle sera toutefois avantageusement comprise entre 1 et 5 N, de préférence 2 à 3 N.

La proportion entre la solution basique et la solution de sel de cérium doit être telle que le nombre d'équivalents basiques soit supérieur ou égal au nombre d'équivalents cérium. Il peut être avantageux de mettre en oeuvre un excès supérieur à 5 % d'équivalents basiques. Le pH du milieu réactionnel peut être fixé entre 6 et environ 10. Il est avantageusement compris entre 7,0 et 9,0. Il peut être particulièrement avantageux de règler le pH dans ces limites à une valeur constante à ± 0,1 unité de pH.

La température du milieu réactionnel doit être comprise, de préférence, entre 5 et 95°C, et, plus particulièrement, entre 40 et 70°C. La durée de mélange dans le milieu réactionnel n'est pas un facteur critique selon l'invention et peut varier dans de larges limites ; généralement, on choisira des durées comprises entre 15 minutes et 2 heures.

On obtient un précipité qui peut être séparé selon les techniques classiques de séparation solide/liquide, telles que décantation, essorage, filtration et/ou centrifugation.

Selon une variante préférée de l'invention, il est souhaitable de soumettre le précipité séparé à un lavage afin d'éliminer les anions restants adsorbés sur le précipité.

Le lavage est opéré, de préférence, à l'eau ou à l'aide d'une solution basique ayant, de préférence, une concentration comprise entre 1 et 5N. On utilise, de préférence, une solution d'ammoniaque. On peut effectuer de un à plusieurs lavages et, le plus souvent, de un à trois lavages.

L'hydroxyde cérique séparé et éventuellement lavé peut être mis en oeuvre directement dans le procédé de l'invention. Il est également possible de lui faire subir une opération de séchage. Le séchage peut être effectué à l'air ou sous pression réduite, par exemple, de l'ordre de 1 à 100 mm de mercure (133,322 Pa à 13332,2 Pa). La température de séchage peut varier entre la température ambiante et 100°C et la durée de séchage n'est pas critique et peut être comprise entre 2 et 48 heures.

L'hydroxyde cérique obtenu selon le procédé décrit ci-dessus est mis en oeuvre préférentiellement dans le procédé, objet de la présente invention.

Conformément au procédé de l'invention, on met en oeuvre l'hydroxyde cérique sous forme de suspension dans un milieu liquide.

Le milieu liquide utilisé peut être tout liquide ne réagissant pas avec de l'hydroxyde cérique dans les conditions de température et de pression de l'invention.

Parmi les liquides susceptibles d'être utilisés, on met en oeuvre de préférence, l'eau ou une solution basique, notamment une solution d'hydroxyde de métal alcalin en particulier d'hydroxyde de sodium ou toute solution d'une base décomposable dans les conditions de calcination de l'invention.

On entend par base décomposable, un composé présentant un $pk_b$ inférieur à 7 et susceptible de se décomposer dans les conditions de calcination de l'invention.

A titre illustratif de ces dernières, on peut citer l'ammoniaque, l'urée, l'acétate d'ammonium, l'hydrogénocarbonate d'ammonium, le carbonate d'ammonium, ou une amine primaire, secondaire, tertiaire, comme, par exemple, la méthylamine, l'éthylamine, la propylamine, la n-butylamine, la sec-butylamine, la n-pentylamine, l'amino-2 pentane, l'amino-2 méthyl-2 butane, l'amino-1 méthyl-3 butane, le diamino-1,2 éthane, le diamino-1,2 propane, le diamino-1,3 propane, le diamino-1,4 butane, le diamino-1,5 pentane, le diamino-1,6 hexane, la diméthylamine, la diéthylamine, la triméthylamine, la triéthylamine ou une amine quaternaire comme, par exemple, un hydroxyde de tétraalkylammonium ayant de préférence des radicaux alkyle contenant de 1 à 4 atomes de carbone et l'on fait appel plus particulièrement à l'hydroxyde de tétraméthylammonium ou l'hydroxyde de tétraéthylammonium.

On peut également mettre en oeuvre un mélange de bases.

Un variante préférée du procédé de l'invention consiste à faire appel à une solution d'une base décomposable car l'on a trouvé, de manière inattendue, que le fait de conduire l'opération d'autoclavage dans un tel milieu permet non seulement d'accroître la surface spécifique de l'oxyde cérique obtenu, mais également de conserver une surface spécifique et un volume poreux élevés jusqu'à des températures de 900°C.

On fait appel, de préférence, à une solution d'ammoniaque, d'hydroxyde de tétraalkylammonium ou leurs mélanges.

Lorsque le milieu liquide est une solution basique, la concentration de celle-ci n'est pas un facteur critique selon l'invention. Elle peut varier dans de larges limites, par exemple, entre 0,1 et 11 N, mais il est préférable de faire appel à des solutions dont la concentration varie entre 1 et 10 N.

Dans le milieu liquide, la concentration de l'hydroxyde cérique exprimée en $CeO_2$ peut varier entre 0,3 et 6 moles/litre, de préférence, entre 2 et 3 moles/litre.

L'opération d'autoclavage est effectuée à une température située entre la température de reflux et la température critique du mélange réactionnel. On choisit de préférence une température comprise entre 100°C et 350°C, et encore plus préférentiellement, entre 150°C et 350°C.

La montée en température s'effectue à une vitesse qui n'est pas critique. On atteint la température réactionnelle en chauffant par exemple entre 30 minutes et 4 heures.

On peut conduire le procédé de l'invention, en introduisant l'hydroxyde cérique en suspension dans le milieu liquide dans une enceinte close, la pression ne résulte donc que du chauffage du mélange réactionnel.

Dans les conditions de températures données ci-dessus, et en milieu aqueux, on peut préciser, à titre illustratif que la pression varie entre 1($10^5$ Pa) et 165 Bars (165.$10^5$ Pa) de préférence entre 5(5. $10^5$ Pa) et 165 Bars (165.$10^5$ Pa).

Il est également possible d'exercer une pression extérieure qui s'ajoute alors à celle consécutive au chauffage.

La durée de l'opération d'autoclavage n'est pas critique. Elle peut varier entre 30 minutes et 6 heures.

A la fin de celle-ci, on laisse refroidir à l'inertie du système et l'on ramène le système à la pression atmosphèrique.

On sépare le produit en suspension dans le milieu liquide selon les techniques classiques de séparation solide-liquide telles que décantation, essorage, filtration et/ou centrifugation.

Le produit recueilli peut être éventuellement soumis à un lavage et/ou un séchage dans les conditions telles que précédemment décrites.

Selon une dernière étape du procédé de l'invention, on calcine le produit obtenu à une température comprise entre 300°C et 1000°C et, de préférence, choisie entre 350°C et 800°C.

La durée de la calcination peut varier dans de larges limites entre 30 minutes et 10 heures et, de préférence, entre 2 et 6 heures.

Lorsque le procédé de l'invention est conduit selon les conditions préférentielles définies ci-après, il permet d'obtenir un oxyde à nouvelles caractéristiques morphologiques.

La caractéristique de l'oxyde cérique de l'invention est qu'il présente une surface spécifique d'au moins 15 m²/g mesurée après calcination à une température comprise entre 800 et 900°C.

L'oxyde cérique préféré de l'invention présente une surface spécifique comprise entre 20 et 60 m²/g mesurée après calcination à une température de 800°C.

Selon les conditions de calcination de l'hydroxyde cérique, l'oxyde cérique présente une surface spécifique comprise entre 15 et 160 m²/g mesurée après calcination à une température variant entre 350 et 900°C.

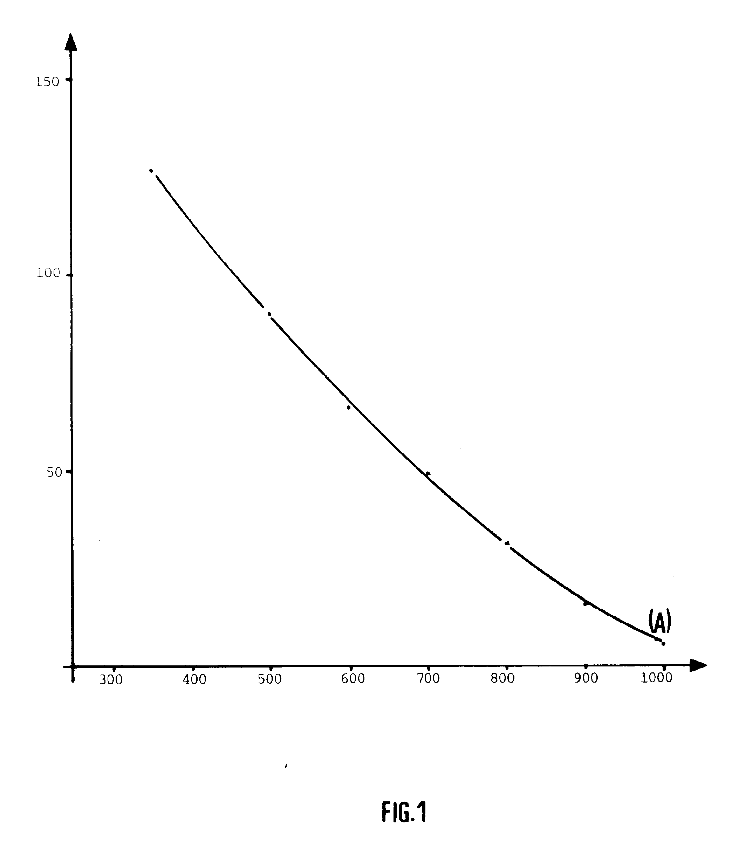

La figure 1 représente un graphe sur lequel est portée la courbe (A) de variation de la surface spécifique (exprimée en m²/g) d'un oxyde cérique de l'invention, en fonction de la température de calcination donnée en °C.

L'oxyde cérique de l'invention présente une surface spécifique d'au moins 15 m²/g, mesurée après calcination à une température comprise entre 800°C et 900°C et une surface spécifique supérieure à ladite surface, après calcination à une température inférieure à l'intervalle précité.

C'est ainsi qu'il peut présenter une surface spécifique variante entre 70 et 160 m²/g et, de préférence, entre 100 et 160 m²/g, mesurée après calcination entre 350 et 450°C. Toutefois, lorqu'il sera soumis à une température plus élevée pouvant atteindre 900°C, au moment de son utilisation, notamment dans le domaine de la catalyse, il présente la caractéristique de conserver une surface spécifique d'au moins 15 m²/g et, de préférence, comprise entre 20 et 60 m²/g lorsqu'il est soumis à une température de 800°C.

Dans la présente demande, les surfaces spécifiques exprimées sont mesurées sur un produit ayant subi une calcination d'au moins 2 heures.

Une autre caractéristique de l'oxyde cérique de l'invention est qu'il présente un volume poreux supérieur à 0,1 cm³/g à une température de mesure comprise entre 800 et 900°C et, de préférence, supérieur à 0,15 cm³/g.

Le volume poreux correspondant aux pores de diamètre inférieur à 60 nm (600 Å) est mesuré au porosimètre à mercure selon la norme ASTM D4284-83 ou suivant la méthode des isothermes d'adsoption d'azote, méthode B.E.T. précitée.

Comme la surface spécifique, le volume poreux dépend de la température de calcination : il peut varier entre 0,35 et 0.15 cm³/g pour une température de calcination allant de 350 à 900°C.

L'oxyde cérique préféré de l'invention présente un volume poreux compris entre 0,15 et 0,25 cm³/g après calcination à une température de 800°C.

La taille des pores d'un oxyde cérique calciné à 800°C s'échelonne entre 3 nm (30 Å) et 60 nm (600 Å) : le diamètre moyen ($d_{50}$) des pores varie entre 20 nm (200 Å) et 30 nm (300 Å), de préférence, aux environs de 25 nm (250 Å).

On définit le diamètre moyen comme étant un diamètre tel que tous les pores inférieurs à ce diamètre constituent 50 % du volume poreux (Vp) total des pores de diamètre inférieur à 60 nm (600 Å).

Un oxyde cérique calciné à 350°C présente des pores de 2 nm (20 Å) à 100 nm (1000 Å) : le diamètre moyen variant de 10 nm (100 Å) à 20 nm (200 Å) et, de préférence, voisin de 15 nm (150 Å).

L'analyse par diffraction X montre que l'oxyde cérique de l'invention présente une phase cristalline de type $CeO_2$ ayant un paramètre de maille variant de 0,542 nm (5,42 Å) à 0,544 nm (5,44 Å). A titre indicatif, on précisera que la taille des cristallites d'un oxyde cérique obtenu après calcination à 350°C se situe entre 4 nm (40 Å) et 6 nm (60 Å) et après calcination à 800°C, entre 10 nm (100 Å) et 20 nm (200 Å).

Le procédé d'obtention de l'oxyde cérique présentant une surface spécifique d'au moins 15 m²/g pour une température de mesure comprise entre 800°C et 900°C est caractérisé par le fait qu'il consiste :

– à préparer une hydroxyde cérique en faisant réagir une solution de sel de cérium , et une base, éventuellement en présence d'un agent oxydant, la proportion de base étant telle que le pH du milieu réactionnel est supérieur à 7 ; à séparer le précipité obtenu, éventuellement à le laver ;

– à mettre l'hydroxyde cérique en suspension dans l'eau ou dans une solution aqueuse d'une base décomposable ;

– à le chauffer dans une enceinte close jusqu'à une température et une pression inférieures respectivement à la température critique et à la pression critique dudit milieu ;

– à refroidir le mélange réactionnel et à le ramener à la pression atmosphérique ;

– à séparer l'hydroxyde cérique ainsi traité ;

– puis à le calciner.

Les réactifs utilisés pour la préparation de l'hydroxyde cérique sont ceux tels que définis précédemment.

A titre d'hydroxydes cériques mis en oeuvre préférentiellement, on fait appel à un hydroxyde cérique répondant à la formule (II) :

$$Ce(OH)_x(X)_y, n\,H_2O \qquad (II)$$

dans laquelle :

– X représente un anion chlorure ou nitrate,

– y est inférieur à 0,5,

– x = 4 - y,

– n varie entre 0 et environ 20

Le composé préféré répond à la formule (II) dans laquelle y est compris entre 0 et 0,1. Encore plus préférentiellement, X représente un anion nitrate.

Le composé préféré répondant à la formule (II) est préparé en faisant réagir une solution de chlorure ou nitrate céreux et une solution d'ammoniaque, en présence d'eau oxygénée, à séparer le précipité obtenu et à le soumettre à au moins un lavage, de préférence, à l'eau.

La proportion de base ajoutée est telle que le pH réactionnel soit supérieur à 7 et, de préférence, compris en 7,5 et 9,0.

La température du milieu réactionnel est choisie entre 5 et 70°C, de préférence, entre 40 et 70°C.

L'hydroxyde cérique est ensuite soumis à une opération d'autoclavage conduite selon les conditions données précédemment : le milieu dans lequel l'hydroxyde cérique est mis en suspension étant une solution d'une base décomposable, de préférence une solution d'ammoniaque ou d'un hydroxyde de tétraalkylammonium.

Les opérations successives de séparation, de lavage éventuel et de calcination étant identiques à celles mentionnées précédemment.

L'oxyde cérique selon l'invention présente une grande surface spécifique à haute température si bien qu'il convient tout-à-fait bien pour le domaine de la catalyse, comme catalyseur ou comme support catalytique.

Il est particulièrement bien adapté pour être employé comme support catalytique dans les réactions de traitement des gaz d'échappement des moteurs à combustion interne.

Les exemples qui suivent, illustrent l'invention sans toutefois la limiter.

Les exemples 1 à 22 mettent en évidence l'influence de l'opération d'autoclavage de l'hydroxyde cérique sur la surface spécifique de l'oxyde cérique obtenu par calcination de l'hydroxyde cérique traité selon l'invention.

Les essais A à H sont donnés à titre comparatif : ils ne font pas intervenir un traitement d'autoclavage.

## Exemple 1

### 1. Synthèse de l'hydroxyde cérique (Essai A) :

Dans un réacteur à double enveloppe ayant un volume utile de 2 litres, équipé d'un dispositif d'agitation, d'un système d'introduction de réactif (pompe doseuse), on introduit à 20°C, pendant une heure, simultanément, 922 cm³ d'une solution de nitrate céreux contenant 179 g/l de $CeO_2$ et 38 cm³ d'une solution d'eau oxygénée à 200 volumes.

A l'aide d'un dispositif d'alimentation relié à un dispositif de régulation de pH, on ajoute pendant une heure, simultanément, 860 cm³ d'une solution aqueuse d'ammoniaque 3N jusqu'à ce que le pH soit de 7.

Les réactifs additionnés, on maintient le milieu réactionnel à 70°C, pendant 1 heure.

On effectue ensuite, la séparation du précipité sur Büchner.

On obtient 280g d'un hydroxyde cérique présentant un rapport molaire $NO_3^-/Ce$ de 0,16.

L'analyse par diffraction RX révèle que l'hydroxyde cérique présente des cristallites ayant un diamètre moyen de 5,5 nm (55 Å).

2. Autoclavage de l'hydroxyde cérique :

Dans un bécher de 100 cm³ de forme haute, on introduit successivement 30 cm³ d'eau désionisée et 30 g de l'hydroxyde cérique préparé précédemment.

Après homogénéisation de ce dernier dans son milieu, le bécher est placé dans un autoclave de volume utile de 0,5 l environ.

L'ensemble est porté à 200°C, soit environ 16 bars ($16.10^5$.Pa), pendant 4 heures au moyen de chauffage approprié.

A la fin de ce traitement hydrothermal, on filtre le précipité sur Büchner.

On détermine sur le produit humide, par diffraction RX, un diamètre moyen de cristallites de 6,5 nm (65 Å).

On le soumet ensuite à une opération de calcination à 350°C, pendant 2 heures.

On détermine ensuite selon les méthodes définies dans la description, la surface spécifique de l'oxyde cérique obtenu et son volume poreux inférieur à 60 nm (600 Å).

On effectue également une diffraction des rayons X pour la détermination de la taille des cristallites perpendiculaires aux directions 110 et 220.

Les résultats obtenus sont donnés dans le tableau I. A titre de comparaison, on indique ceux d'un oxyde cérique préparé, par calcination directe à 350°C, pendant 2 heures de l'hydroxyde cérique synthétisé sous 1 (essai A).

Tableau I

| | surface specifique m²/g | volume poreux cm³/g | diamètre moyen des cristallites nm ( Å) |
|---|---|---|---|
| Exemple 1 | 101 | 0,06 | 7,0 (70) |
| Essai A | 54 | 0,04 | 7,5 (75) |

On constate que l'oxyde cérique obtenu après un traitement d'autoclavage et calciné à 350°C, présente une surface spécifique deux fois plus élevée et une taille des cristallites plus faible.

Exemple 2

1. Synthèse de l'hydroxyde cérique (Essai B) :

Dans un appareillage tel que décrit à l'exemple 1, on introduit à 50°C, 922 cm³ d'une solution de nitrate céreux contenant 179 g/l de $CeO_2$ et 38 cm³ d'une solution d'eau oxygénée à 200 volumes.

On ajoute jusqu'à obtention d'un pH égal à 9,0, 860 cm³ d'une solution aqueuse d'ammoniaque 4,6N.

Les réactifs additionnés, on maintient le milieu réactionnel à 70°C pendant 1 heure.

On effectue ensuite, la séparation du précipité sur Büchner.

On obtient 515 g d'un hydroxyde cérique présentant un rapport molaire $No_3^-/Ce$ de 0,1.

L'analyse par diffraction RX révèle que l'hydroxyde cérique présente des cristallites ayant un diamètre moyen de 3 nm (30 Å).

2. Autoclavage de l'hydroxyde cérique :

Selon le protocole opératoire décrit dans l'exemple 1, on soumet 30 g de l'hydroxyde cérique préparé ci-dessus, mis en suspension dans 30 cm³ d'eau désionisée à un traitement en autoclave à 200°C pendant 4 heures.

On détermine sur le produit humide, par diffraction RX, un diamètre moyen de cristallites de 4,5 nm (45 Å).

A la fin de ce traitement hydrothermal, on filtre le précipité sur Büchner.

On le soumet ensuite à une opération de calcination à 350°C, pendant 2 heures.

On détermine ensuite la surface spécifique, le volume poreux et la taille des cristallites de l'oxyde cérique ayant subi le traitement d'autoclavage (exemple 2) et, à titre comparatif, de l'oxyde cérique préparé par calcination directe à 350°C pendant 2 heures, de l'hydroxyde cérique synthétisé sous 1 (essai B).

Les résultats obtenus sont consignés dans le tableau II.

Tableau II

|  | surface spécifique m²/g | volume poreux cm³/g | diamètre moyen des cristallites nm (Å) |
|---|---|---|---|
| Exemple 2 | 100 | 0,26 | 5,0 (50) |
| Essai B | 70 | 0,20 | 6,5 (65) |

On observe, comme dans l'exemple 1, l'effet favorable du traitement d'autoclavage sur la surface spécifique et le volume poreux de l'oxyde cérique obtenu après calcination à 350°C.

Exemple 3

1. Synthése de l'hydroxyde cérique (Essai C) :

Dans un appareillage tel que décrit à l'exemple 1, on introduit à 50°C, 922 cm³ d'une solution de nitrate céreux contenant 179 g/l de $CeO_2$ et 38 cm³ d'une solution d'eau oxygénée à 200 volumes.

On ajoute jusqu'à obtention d'un pH égal à 8,4 825 cm³ d'une solution aqueuse d'ammoniaque 4N.

Les réactifs additionnés, on maintient le milieu réactionnel à 70°C pendant 1 heure.

On effectue ensuite, la séparation du précipité, sur Büchner.

On obtient 569 g d'un hydroxyde cérique présentant un rapport molaire $NO_3^-/Ce$ de 0,1.

L'analyse par diffraction RX révèle que l'hydroxyde cérique présente des cristallites ayant un diamètre de 3,0 nm (30 Å).

2. Autoclavage de l'hydroxyde cérique :

Selon le protocole opératoire décrit dans l'exemple 1, on soumet 30 g de l'hydroxyde cérique préparé ci-dessus, mis en suspension dans 30 cm³ d'eau désionisée à un traitement en autoclave à 200°C pendant 4 heures.

On détermine sur le produit humide, par diffraction RX, un diamètre moyen de cristallites de 4,5 nm (45 Å).

A la fin de ce traitement hydrothermal, on filtre le précipité sur Büchner.

On le soumet ensuite à une opération de calcination à 350°C pendant 2 heures.

On détermine ensuite la surface spécifique, le volume poreux et la taille des cristallites de l'oxyde cérique ayant subi le traitement d'autoclavage (exemple 3) et, à titre comparatif, de l'oxyde cérique préparé par calcination directe à 350°C pendant 2 heures, de l'hydroxyde cérique synthétisé sous 1 (essai C).

Les résultats obtenus sont consignés dans le tableau III.

Tableau III

| | surface spécifique $m^2/g$ | volume poreux $cm^3/g$ | diamètre moyen des cristallites nm (Å) |
|---|---|---|---|
| Exemple 3 | 110 | 0,20 | 5,0 (50) |
| Essai C | 46 | 0,16 | 6,5 (65) |

On note que l'oxyde cérique calciné à 350°C, présente une surface spécifique et un volume poreux plus élevés et une taille des cristallites plus faible.

Exemple 4

1. Synthèse de l'hydroxyde cérique (Essai D) :

Dans un appareillage tel que décrit à l'exemple 1, on introduit à 50°C, 922 cm³ d'une solution de nitrate céreux contenant 179 g/l de $CeO_2$ et 38 cm³ d'une solution d'eau oxygénée à 200 volumes.

On ajoute jusqu'à obtention d'un pH égal à 8,4, 825 cm³ d'une solution aqueuse d'ammoniaque 4N.

Les réactifs additionnés, on maintient le milieu réactionnel à 70°C pendant 1 heure.

On effectue ensuite, la séparation du précipité, sur Büchner.

L'analyse par diffraction RX révèle que l'hydroxyde cérique présente des cristallites ayant un diamètres moyen de 3,0 nm (30 Å).

2. Autoclavage de l'hydroxyde cérique :

Selon le protocole opératoire décrit dans l'exemple 1, on soumet 30 g de l'hydroxyde cérique préparé ci-dessus, mis en suspension dans 30 cm³ d'eau désionisée à un traitement en autoclave à 200°C pendant 4 heures.

On détermine sur le produit humide, par diffraction RX, un diamètre moyen de cristallites de 4,5 nm (45 Å).

A la fin de ce traitement hydrothermal, on filtre le précipité sur Büchner.

On le soumet ensuite à une opération de calcination de 800°C, pendant 2 heures.

On détermine ensuite la surface spécifique, le volume poreux et la taille des cristallites de l'oxyde cérique ayant subi le traitement d'autoclavage (exemple 4) et, à titre comparatif, de l'oxyde cérique préparé par calcination directe à 800°C pendant 2 heures, de l'hydroxyde cérique synthétisé sous 1 (essai D).

Les résultats sont consignés dans le tableau IV.

Tableau IV

| | surface spécifique $m^2/g$ | volume poreux $cm^3/g$ | diamètre moyen des cristallites nm ($Å$) |
|---|---|---|---|
| Exemple 4 | 21 | 0,08 | – |
| Essai D | 11 | 0,06 | 30 (300) |

Par rapport à l'exemple 3, l'oxyde cérique est calciné à plus haute température. On note une diminution de surface et de volume poreux due au frittage important qui se traduit par la forte augmentation des cristallites entre 350°C et 800°C.

Exemple 5

1. Synthèse de l'hydroxyde cérique (Essai C) :

Elle est effectuée conformément au mode opératoire de l'exemple 3 - 1.

2. Autoclavage de l'hydroxyde cérique :

Selon le protocole opératoire décrit dans l'exemple 1, on soumet 30 g de l'hydroxyde cérique préparé ci-dessus, mis en suspension dans 30 $cm^3$ d'une solution aqueuse d'ammoniaque 1N, à un traitement en autoclave, à 200°C pendant 4 heures.

On détermine sur le produit humide, par diffraction RX, un diamètre moyen de cristallites de 4,0 nm (40 $Å$).

A la fin de ce traitement hydrothermal, on filtre le précipité sur Büchner.

On le soumet ensuite à une opération de calcination à 350°C, pendant 2 heures.

On détermine ensuite la surface spécifique, le volume poreux et la taille des cristallites de l'oxyde cérique ayant subi le traitement d'autoclavage (exemple 5) et, à titre comparatif, de l'oxyde cérique préparé par calcination directe à 350°C pendant 2 heures, de l'hydroxyde cérique synthétisé sous 1 (essai C).

Les résultats obtenus sont consignés dans le tableau V.

Tableau V

| | surface spécifique $m^2/g$ | volume poreux $cm^3/g$ | diamètre moyen des cristallites nm ($Å$) |
|---|---|---|---|
| Exemple 5 | 127 | 0,35 | 4,5 (45) |
| Essai C | 46 | 0,16 | 6,5 (65) |

On observe comme dans les exemples précédents l'effet favorable de l'autoclavage sur la surface spécifique et le volume poreux de l'oxyde cérique obtenu après calcination à 800°C.

Exemple 6

1. Synthèse de l'hydroxyde cérique (Essai D) :

Elle est effectuée conformément au mode opératoire de l'exemple 4 - 1.

2. Autoclavage de l'hydroxyde cérique :

Selon le protocole opératoire décrit dans l'exemple 1, on soumet 30 g de l'hydroxyde cérique préparé ci-dessus, mis en suspension dans 30 cm³ d'une solution aqueuse d'ammoniaque 1N, à un traitement en autoclave, à 200°C pendant 4 heures.
On détermine sur le produit humide, par diffraction RX, un diamètre moyen de cristallites de 4,0 nm (40 Å).
A la fin de ce traitement hydrothermal, on filtre le précipité sur Büchner.
On le soumet ensuite à une opération de calcination à 800°C pendant 2 heures.
On détermine ensuite la surface spécifique, le volume poreux et la taille des cristallites de l'oxyde cérique ayant subi le traitement d'autoclavage (exemple 6) et, à titre comparatif, de l'oxyde cérique préparé par calcination directe à 800°C pendant 2 heures, de l'hydroxyde cérique synthétisé sous 1 (essai D).
Les résultats obtenus sont consignés dans le tableau VI.

Tableau VI

|  | surface spécifique $m^2/g$ | volume poreux $cm^3/g$ | diamètre moyen des cristallites nm (Å) |
|---|---|---|---|
| Exemple 6 | 30 | 0,19 | 19 (190) |
| Essai D | 11 | 0,06 | 30 (300) |

On constate que l'autoclavage de l'hydroxyde cérique, en milieu ammoniacal, permet de limiter le frittage des cristallites à la calcination puisque la taille des cristallites de l'oxyde cérique obtenu après calcination à 800°C ne dépasse pas 20 nm (200 Å).

Exemples 7 et 8

1. Synthèse de l'hydroxyde cérique :

Elle est effectuée conformément au mode opératoire de l'exemple 3-1.

2. Autoclavage de l'hydroxyde cérique :

Dans un bécher de 100 cm³ de forme haute, on introduit successivement 25 cm³ d'une solution aqueuse d'hydroxyde de tétraéthylammonium à 20 % et 15 g d'hydroxyde cérique préparé précédemment.
Après homogénéisation du milieu, le bécher est placé dans l'autoclave.
L'ensemble est porté à 200°C, soit environ 16 bars (16.10⁵ Pa), pendant 3 heures au moyen de chauffage approprié.
A la fin de ce traitement thermique, on filtre le précipité sur Büchner.
On le soumet ensuite à une opération de calcination dans les conditions suivantes : 2 heures à 350°C dans l'exemple 7 et 1 heure à 800°C dans l'exemple 8.

On détermine ensuite la surface spécifique et le volume poreux des oxydes cériques obtenus.
On rassemble les résultats dans le tableau VII.

Tableau VII

|  | surface spécifique $m^2/g$ | volume poreux $cm^3/g$ |
|---|---|---|
| Exemple 7 | 115 | 0,53 |
| Exemple 8 | 29 | 0,23 |

Exemples 9 à 20 :

1. Synthèse de l'hydroxyde cérique (Essais E et F) :

Dans un appareillage tel que décrit dans l'exemple 1, on introduit à température ambiante, 922 $cm^3$ d'une solution de nitrate céreux contenant 150 g/l de $CeO_2$ et 38 $cm^3$ d'eau oxygénée à 200 volumes.
On ajoute jusqu'à obtention d'un pH égal à 9,5, 150 $cm^3$ d'une solution aqueuse d'ammoniaque 3 N en maintenant la température à 8°C.
Les réactifs additionnés, on maintient le milieu réactionnel à 8°C pendant 1 heure.
On effectue ensuite la séparation du précipité, sur Büchner et l'on effectue un lavage à l'eau.
L'analyse par diffraction RX révèle que l'hydroxyde cérique présente des cristallites ayant un diamètre moyen de 3,5 nm (35 Å).

2. Autoclavage de l'hydroxyde cérique

On effectue une série d'essais dans lesquels on fait varier la température d'autoclavage entre 160°C et 330°C.
Selon le même protocole opératoire décrit dans les exemples précédents, on met 150 g d'hydroxyde cérique préparé ci-dessus en suspension dans 150 $cm^3$ d'une solution aqueuse d'ammoniaque 1 N et on le soumet à un traitement en autoclave pendant 4 heures.
A la fin de ce traitement thermique, on filtre le précipité sur Büchner.
On le soumet ensuite à une opération de calcination dans les conditions suivantes : 2 heures à 350°C dans les exemples 9 à 14 et 2 heures à 800°C dans les exemples 15 à 20.
On détermine ensuite la surface spécifique et le volume poreux des oxydes cériques obtenus.
A titre comparatif, on donne les résultats obtenus avec un oxyde cérique préparé par calcination directe à 350°C (essai E) et à 800°C (essai F) pendant 2 heures, de l'hydroxyde cérique synthétisé sous 1.
On consigne tous les résultats obtenus dans le tableau VIII.

Tableau VIII

| | Température d'autoclavage | Température de calcination | surface spécifique $m^2/g$ | volume poreux $cm^3/g$ |
|---|---|---|---|---|
| Exemple 9 | 160°C | 350°C | 69 | |
| Exemple 10 | 180°C | 350°C | 85 | |
| Exemple 11 | 200°C | 350°C | 131 | 0,24 |
| Exemple 12 | 250°C | 350°C | 126 | 0,27 |
| Exemple 13 | 300°C | 350°C | 81 | 0,20 |
| Exemple 14 | 330°C | 350°C | 73 | 0,25 |
| Essai E | | 350°C | 65 | 0,12 |
| Exemple 15 | 160°C | 800°C | 20 | |
| Exemple 16 | 180°C | 800°C | 20 | |
| Exemple 17 | 200°C | 800°C | 26 | 0,15 |
| Exemple 18 | 250°C | 800°C | 27 | 0,14 |
| Exemple 19 | 300°C | 800°C | 31 | 0,12 |
| Exemple 20 | 330°C | 800°C | 45 | 0,17 |
| Essai F | | 800°C | 9,7 | 0,07 |

Exemple 21

1. Synthèse de l'hydroxyde cérique (Essai G) :

Dans un réacteur à double enveloppe dans laquelle circule de l'eau thermorégulée à 20°C et ayant une capacité utile de 2000 cm³, équipé d'un dispositif d'agitation, d'un système d'introduction de réactifs, on introduit simultanément et en continu :
– une solution aqueuse de nitrate cérique contenant 1 mole/litre de cérium IV, 0,06 mole/litre de cérium III et ayant une acidité libre de 0,5 N, préparée par électrolyse conformément à FR-A 2 570 087 (n° 84 13641), à raison de 0,92 litre/heure,
– une solution aqueuse d'ammoniaque 3 N, à raison de 1,08 litre/heure.
Le mélange est effectué sous agitation de 300 tours/minute et le temps de séjour est de 60 minutes.
Les débits d'addition des solutions de départ sont régulés de telle sorte que le pH soit maintenu à 5,5.
On sépare le précipité formé par filtration sur Büchner.
On obtient un produit contenant 42 % de $CeO_2$ et ayant une taille de cristallites inférieure à 3 nm (30 Å).

2. Autoclavage de l'hydroxyde cérique

Dans un autoclave de 0,5 l de volume utile, on introduit successivement 300 cm³ de $NH_4OH$ 1 N et 100 g de l'hydroxyde cérique préparé précédemment.
Après l'homogénéisation de ce dernier dans son milieu, l'ensemble est porté à 200°C, soit environ 16 bars ($16.10^5$ Pa), pendant 3 heures au moyen de chauffage approprié.
A la fin de ce traitement hydrothermal, on filtre le précipité sur Büchner.
On le soumet ensuite à une opération de calcination dans les conditions suivantes : 3 heures à 350°C et 1 heure à 800°C.
On détermine ensuite selon les méthodes définies dans la description, la surface spécifique de l'oxyde cérique obtenu et son volume poreux.
Les résultats obtenus sont donnés dans le tableau IX. A titre comparatif, on indique ceux d'un oxyde cérique préparé par calcination directe à 350°C pendant 2 heures et à 800°C pendant 1 heure de l'hydroxyde cérique synthétisé sous 1.

Tableau IX

|  | Température de calcination °C | surface spécifique m²/g | volume poreux cm³/g |
|---|---|---|---|
| Exemple 21 | 350 800 | 135 7 | 0,21 0,08 |
| Essai G | 350 800 | 46 3,5 | 0,09 0,04 |

## Exemple 22

### 1. Synthèse de l'hydroxyde cérique (Essai H) :

Dans un réacteur à double enveloppe dans laquelle circule de l'eau thermorégulée à 20°C et ayant une capacité utile de 2000 cm³, équipé d'un dispositif d'agitation, d'un système d'introduction de réactifs, on introduit simultanément et en continu :

– une solution aqueuse de nitrate cérique contenant 1 mole/litre de cérium IV, 0,06 mole/litre de cérium III et ayant une acidité libre de 0,5 N, préparée par électrolyse conformément à FR-A 2 570 087 (n° 84 13641), à raison de 0,78 litre/heure,

– une solution aqueuse d'ammoniaque 3 N, à raison de 1,22 litres/heure.

Le mélange est effectué sous agitation de 300 tours/minute et le temps de séjour est de 60 minutes.

Les débits d'addition des solutions de départ sont régulés de telle sorte que le pH soit maintenu à 9,0.

On sépare le précipité formé par filtration sur Büchner.

On obtient un produit contenant 20 % en poids d'oxyde cérique et ayant une taille de cristallites inférieure à 3 nm (30 Å).

### 2. Autoclavage de l'hydroxyde cérique

Dans un autoclave de 0,5 l de volume utile, on introduit successivement 300 cm³ de $NH_4OH$ 1 N et 100 g de l'hydroxyde cérique préparé précédemment.

Après l'homogénéisation de ce dernier dans son milieu, l'ensemble est porté à 200°C, soit environ 16 bars $(16.10^5$ Pa), pendant 3 heures au moyen de chauffage approprié.

A la fin de ce traitement hydrothermal, on filtre le précipité sur Büchner.

On le soumet ensuite à une opération de calcination dans les conditions suivantes : 2 heures à 350°C et 1 heure à 800°C.

On détermine ensuite selon les méthodes définies dans la description, la surface spécifique de l'oxyde cérique obtenu et son volume poreux.

Les résultats obtenus sont donnés dans le tableau X. A titre comparatif, on indique ceux d'un oxyde cérique préparé par calcination directe à 350°C pendant 2 heures et à 800°C pendant 1 heure de l'hydroxyde cérique synthétisé sous 1.

14

Tableau X

|  | Température de calcination °C | surface spécifique m$^2$/g | volume poreux cm$^3$/g |
|---|---|---|---|
| Exemple 22 | 350<br>800 | 155<br>17 | 0,24<br>0,06 |
| Essai H | 350<br>800 | 53<br>4,9 | 0,05<br>0,03 |

On note l'effet favorable de l'autoclavage sur la surface spécifique et le volume poreux de l'oxyde cérique obtenu après calcination à 800°C.

**Revendications**

1. Procédé de préparation d'un oxyde cérique obtenu par calcination d'un hydroxyde cérique caractérisé par le fait que l'hydroxyde cérique est soumis à un autoclavage, avant l'opération de calcination.

2. Procédé selon la revendication 1 caractérisé par le fait qu'il consiste :
– à mettre l'hydroxyde cérique en suspension dans un milieu aqueux neutre ou basique,
– à le chauffer dans une enceinte close jusqu'à une température et une pression inférieures respectivement à la température critique et à la pression critique dudit milieu d'autoclavage,
– à refroidir le milieu réactionnel et à le ramener à la pression atmosphèrique,
– à séparer l'hydroxyde cérique ainsi traité,
– puis à le calciner.

3. Procédé selon la revendication 2 caractérisé par le fait que l'hydroxyde cérique répond à la formule suivante :

$$Ce(OH)_{4-ay} (A)_y, nH_2O \qquad (I)$$

dans laquelle :
– A symbolise un anion résiduel,
– a est un nombre entier représentant la charge de l'anion,
– y est un nombre compris entre 0 et 2,
– n est un nombre compris entre 0 et environ 20.

4. Procédé selon la revendication 3 caractérisé par le fait que l'hydroxyde cérique répond à la formule (I) dans laquelle a est inférieur ou égal à 3.

5. Procédé selon l'une des revendications 3 et 4 caractérisé par le fait que l'hydroxyde cérique répond à la formule (I) dans laquelle a est égal à 1 ou 2.

6. Procédé selon l'une des revendications 3 à 5 caractérisé par le fait qu'il répond à la formule (I) dans laquelle y est un nombre compris entre 0 et 1,5.

7. Procédé selon l'une des revendications 3 à 6 caractérisé par le fait que l'anion résiduel est un chlorure, sulfate, nitrate, acétate, formiate.

8. Procédé selon la revendication 7 caractérisé par le fait que l'anion résiduel est un chlorure ou un nitrate.

9. Procédé selon l'une des revendications 3 à 8 caractérisé par le fait que l'hydroxyde cérique est préparé en faisant réagir une solution de sel de cérium et une base, éventuellement en présence d'un agent oxydant, à séparer le précipité obtenu, éventuellement à le laver et/ou le sécher.

10. Procédé selon la revendication 9 caractérisé par le fait que la solution de sel de cérium est une solution de chlorure céreux ou de nitrate de cérium à l'état céreux ou cérique ou un mélange d'entre eux.

11. Procédé selon la revendication 10 caractérisé par le fait que la solution de sel de cérium est une solution aqueuse de nitrate cérique ou une solution aqueuse de nitrate céreux mis en oeuvre en présence d'un agent oxydant.

12. Procédé selon la revendication 11 caractérisé par le fait que la solution de sel de cérium est une solution aqueuse de nitrate cérique provenant de l'oxydation électrochimique d'une solution de nitrate céreux ou de l'action de l'acide nitrique sur un oxyde cérique hydraté.

13. Procédé selon l'une des revendications 9 à 12 caractérisé par le fait que la base est une solution d'amoniaque.

14. Procédé selon l'une des revendications 9 à 13 caractérisé par le fait que l'agent oxydant est l'eau oxygénée.

15. Procédé selon l'une des revendications 9 à 14 caractérisé par le fait que la quantité de base ajoutée est telle que le pH du milieu réactionnel est compris entre 6 et environ 10.

16. Procédé selon la revendication 15 caractérisé par le fait que le pH est compris entre 7,0 et 9,0.

17. Procédé selon l'une des revendications 9 à 16 caractérisé par le fait que la température du milieu réactionnel est comprise entre 5°C et 95°C.

18. Procédé selon la revendication 17 caractérisé par le fait que la température du milieu réactionnel est comprise entre 40 et 70°C.

19. Procédé selon l'une des revendications 9 à 18 caractérisé par le fait que l'hydroxyde cérique séparé est soumis à un lavage effectué à l'eau ou à l'aide d'une solution basique.

20. Procédé selon la revendication 1 caractérisé par le fait que le milieu liquide est l'eau ou une solution basique.

21. Procédé selon la revendication 20 caractérisé par le fait que la solution basique est une solution d'hydroxyde de métal alcalin ou une solution d'une base décomposable dans les conditions de calcination.

22. Procédé selon la revendication 21 caractérisé par le fait que la base décomposable est l'ammoniaque, l'urée, l'hydrogénocarbonate d'ammonium, le carbonate d'ammonium, une amine primaire, secondaire, tertiaire ou quaternaire ou leurs mélanges.

23. Procédé selon la revendication 22 caractérisé par le fait que la base décomposable est l'ammoniaque, un hydroxyde de tétraalkylammonium ou leurs mélanges.

24. Procédé selon l'une des revendications 20 à 23 caractérisé par le fait que la concentration de la solution basique varie entre 1 et 10N.

25. Procédé selon l'une des revendications 1 à 24 caractérisé par le fait que la concentration de l'hydroxyde cérique exprimée en $CeO_2$ varie entre 0,3 et 6 moles/litre.

26. Procédé selon la revendication 25 caractérisé par le fait que ladite concentration est comprise entre 2 et 3 moles/litre.

27. Procédé selon l'une des revendications 1 à 26 caractérisé par le fait que la température d'autoclavage varie entre 100 et 350°C.

28. Procédé selon la revendication 27 caractérisé par le fait que ladite température est comprise entre 150 et 350°C.

29. Procédé selon l'une des revendications 1 à 28 caractérisé par le fait que la pression varie entre 1 ($10^5$ Pa) et 165 bars ($165.10^5$ Pa).

30. Procédé selon la revendication 29 caractérisé par le fait que ladite pression est comprise entre 5 ($5.10^5$ Pa) et 165 bars ($165.10^5$ Pa).

31. Procédé selon l'une des revendications 27 à 30 caractérisé par le fait que la durée de l'autoclavage varie entre 30 minutes et 6 heures.

32. Procédé selon l'une des revendications 1 à 31 caractérisé par le fait que la température de calcination est comprise entre 300 et 1000°C.

33. Procédé selon la revendication 32 caractérisé par le fait que ladite température est comprise entre 350 et 800°C.

34. Procédé selon l'une des revendications 32 et 33 caractérisé par le fait que la durée de calcination varie entre 2 et 6 heures.


## Claims

1. A process for the preparation of a ceric oxide produced by calcination of a ceric hydroxide characterised in that the ceric hydroxide is subjected to an autoclaving operation prior to the calcination operation.

2. A process according to claim 1 characterised in that it comprises:
   – putting the ceric hydroxide in suspension in an aqueous, neutral or basic medium,
   – heating it in a closed space to a temperature and a pressure which are respectively lower than the critical temperature and the critical pressure of said autoclaving medium,

– cooling the reaction medium and restoring it to atmospheric pressure,

– separating the ceric hydroxide treated in that way, and

– then calcining it.

A process according to claim 2 characterised in that the ceric hydroxide corresponds to the following formula:

$$Ce(OH)_{4-ay} (A)_y, nH_2O \qquad (I)$$

wherein:

– A represents a residual anion,

– a is an integer representing the charge of the anion,

– y is a number between 0 and 2, and

– n is a number between 0 and about 20.

4. A process according to claim 3 characterised in that the ceric hydroxide corresponds to formula (I) in which a is less than or equal to 3.

5. A process according to one of claim 3 and 4 characterised in that the ceric hydroxide corresponds to formula (I) in which a is equal to 1 or 2.

6. A process according to one of claims 3 to 5 characterised in that it corresponds to formula (I) in which y is a number between 0 and 1.5.

7. A process according to one of claims 3 to 6 characterised in that the residual anion is a chloride, sulphate, nitrate, acetate or formate.

8. A process according to claim 7 characterised in that the residual anion is a chloride or a nitrate.

9. A process according to one of claims 3 to 8 characterised in that the ceric hydroxide is prepared by reacting a cerium salt solution and a base, possibly in the presence of an oxidising agent, separating the precipitate obtained, and optionally washing it and/or drying it.

10. A process according to claim 9 characterised in that the cerium salt solution is a solution of cerous chloride or cerium nitrate in the cerous or ceric state or a mixture thereof.

11. A process according to claim 10 characterised in that the cerium salt solution is an aqueous solution of ceric nitrate or an aqueous solution of cerous nitrate used in the presence of an oxidising agent.

12. A process according to claim 11 characterised in that the cerium salt solution is an aqueous solution of ceric nitrate resulting from the electrochemical oxidation of a solution of cerous nitrate or the action of nitric acid on a hydrated ceric oxide.

13. A process according to one of claims 9 to 12 chacterised in that the base is a solution of ammonia.

14. A process according to one of claims 9 to 13 characterised in that the oxidising agent is hydrogen peroxide.

15. A process according to one of claims 9 to 14 characterised in that the amount of base tided is such that the pH-value of the reaction medium is between 6 and about 10.

16. A process according to claim 15 characterised in that the pH-value is between 7.0 and 9.0.

17. A process according to one of claims 9 to 16 chacterised in that the temperature of the reaction medium is betweeen 5°C and 95°C.

18. A process according to claim 17 characterised in that the temperature of the reaction medium is betweeen 40 and 70°C.

19. A process according to one of claims 9 to 18 characterised in that the separated ceric hydroxide is subjected to a washing operation which is performed using water or by means of a basic solution.

20. A process according to claim 1 characterised in that the liquid medium is water or a basic solution.

21. A process according to claim 20 characterised in that the basic solution is a solution of alkali metal hydroxide or a solution of a base which is decomposable under the calcination conditions.

22. A process according to claim 21 characterised in that the decomposable base is ammonia, urea, ammonium hydrogen carbonate, ammonium carbonate, a primary , secondary, tertiary or quaternary amine or mixtures thereof.

23. A process according to claim 22 characterised in that the decomposable base is ammonia, a tetraalkyl ammonium hydroxide or mixtures thereof.

24. A process according to one of claims 20 to 23 chacterised in that the concentration of the basic solution varies between 1 and 10 N.

25. A process according to one of claims 1 to 24 characterised in that the concentration of the ceric hydroxide expressed as $CeO_2$ varies between 0.3 and 6 mols/litre.

26. A process according to claim 25 characterised in that said concentration is between 2 and 3 mols/litre.

27. A process according to one of claims 1 to 26 characterised in that the autoclaving temperature varies between 100 and 350°C.

28. A process according to claim 27 characterised in that said temperature is between 150 and 350°C.

29. A process according to one of claims 1 to 28 characterised in that the pressure varies between 1 ($10^5$Pa) and 165 bars (165.$10^5$Pa).

30. A process according to claim 29 characterised in that said pressure is between 5 (5.$10^5$Pa) and 165 bars (165. $10^5$Pa).

31. A process according to one of claims 27 to 30 characterised in that the duration of the autoclaving operation varies between 30 minutes and 6 hours.

32. A process according to one of claims 1 to 31 characterised in that the calcination temperature is between 300 and 1000°C.

33. A process according to claim 32 characterised in that said temperature is between 350 and 800°C.

34. A process according to one of claims 32 and 33 characterised in that the calcination time varies between 2 and 6 hows.


## Patentansprüche

1. Verfahren zur Herstellung eines Ceroxids, das durch Brennen eines Cerhydroxids erhalten wird, dadurch gekennzeichnet, daß das Ceroxid vor dem Brennen einer Autoklavenbehandlung unterworfen wird.

2. Verfahren nach Anspruch 1, dadurch gekennzeichnet, daß es aus Folgenden besteht:
– das Cerhydroxid wird in einem wäßrigen, neutralen oder basischen Medium suspendiert,
– es wird in einem geschlossenen Raum auf eine Temperatur und einen Druck erhitzt, die unter der kritischen Temperatur bzw. dem kritischen Druck des Mediums der Autoklavenbehandlung liegen,
– das Reaktionsmedium wird abgekühlt und auf Atmosphärendruck zurückgeführt,
– das so behandelte Cerhydroxid wird abgetrennt
– und dann gebrannt.

3. Verfahren nach Anspruch 2, dadurch gekennzeichnet, daß das Cerhydroxid der folgenden Formel entspricht:

$$Ce(OH)_{4-ay} (A)_y, nH_2O \qquad (I)$$

in der:
– A ein Restanion darstellt,
– a eine ganze Zahl ist, die die Ladung des Anions angibt,
– y eine Zahl zwischen 0 und 2 ist,
– n eine Zahl zwischen 0 und etwa 20 ist.

4. Verfahren nach Anspruch 3, dadurch gekennzeichnet, daß das Cerhydroxid der Formel (I) entspricht, in der a kleiner oder gleich 3 ist.

5. Verfahren nach einem der Ansprüche 3 und 4, dadurch gekennzeichnet, daß das Cerhydroxid der Formel (I) entspricht, in der a 1 oder 2 ist.

6. Verfahren nach einem der Ansprüche 3 bis 5, dadurch gekennzeichnet, daß es der Formel (I) entspricht, in der y eine Zahl zwischen 0 und 1,5 ist.

7. Verfahren nach einem der Ansprüche 3 bis 6, dadurch gekennzeichnet, daß das Restanion ein Chlorid-, Sulfat-, Nitrat-, Acetat- oder Formiatanion ist.

8. Verfahren nach Anspruch 7, dadurch gekennzeichnet, daß das Restanion ein Chlorid- oder ein Nitratanion ist.

9. Verfahren nach einem der Ansprüche 3 bis 8, dadurch gekennzeichnet, daß das Cerhydroxid hergestellt wird durch Umsetzen einer Lösung eines Cersalzes mit einer Base, gegebenenfalls in Gegenwart eines Oxidationsmittels, Abtrennen des erhaltenen Niederschlags, gegebenenfalls Waschen und/oder Trocknen.

10. Verfahren nach Anspruch 9, dadurch gekennzeichnet, daß die Lösung des Cersalzes eine Lösung von Cer-(III)-chlorid oder von Cernitrat in III- oder IV-wertigem Zustand oder ein Gemisch aus diesen ist.

11. Verfahren nach Anspruch 10, dadurch gekennzeichnet, daß die Lösung des Cersalzes eine wäßrige Lösung von Cer-(IV)-nitrat oder eine wäßrige Lösung von Cer-(III)-nitrat, die in Gegenwart eine Oxidationsmittels eingesetzt wird, ist.

12. Verfahren nach Anspruch 11, dadurch gekennzeichnet, daß die Lösung des Cersalzes eine wäßrige Lösung von Cer-(IV)-nitrat ist, die aus der elektrochemischen Oxidation einer Lösung von Cer-(III)-nitrat oder der Einwirkung von Salpetersäure auf ein Ceroxid-hydrat stammt.

13. Verfahren nach einem der Ansprüche 9 bis 12, dadurch gekennzeichnet, daß die Base eine Ammoniaklösung ist.

14. Verfahren nach einem der Ansprüche 9 bis 13, dadurch gekennzeichnet, daß das Oxidationsmittel Wasserstoffperoxid ist.

15. Verfahren nach einem der Ansprüche 9 bis 14, dadurch gekennzeichnet, daß soviel Base zugesetzt wird, daß der pH-Wert des Reaktionsmediums zwischen 6 und etwa 10 liegt.

16. Verfahren nach Anspruch 15, dadurch gekennzeichnet, daß der pH-Wert zwischer 7,0 und 9,0 liegt.

17. Verfahren nach einem der Ansprüche 9 bis 16, dadurch gekennzeichnet, daß die Temperatur des Rektionsmediums im Bereich von 5 bis 95°C liegt.

18. Verfahren nach Anspruch 17, dadurch gekennzeichnet, daß die Temperatur des Rektionsmediums im Bereich von 40 bis 70°C liegt.

19. Verfahren nach einem der Ansprüche 9 bis 18, dadurch gekennzeichnet, daß das abgetrennte Cerhydroxid mit Wasser oder mit einer basischen Lösung gewaschen wird.

20. Verfahren nach Anspruch 1, dadurch gekennzeichnet, daß das flüssige Medium Wasser oder eine basische Lösung ist.

21. Verfahren nach Anspruch 20, dadurch gekennzeichnet, daß die basische Lösung eine Lösung eines Alkalimetallhydroxids ist oder eine Lösung einer unter den Brennbedingungen zersetzbaren Base.

22. Verfahren nach Anspruch 21, dadurch gekennzeichnet, daß die zersetzbare Base Ammoniak, Harnstoff, Ammoniumhydrogencarbonat, Ammoniumcarbonat, ein primäres, sekundäres, tertiäres oder quaternäres Amin oder eines ihrer Gemische ist.

23. Verfahren nach Anspruch 22, dadurch gekennzeichnet, daß die zersetzbare Base Ammoniak, ein Tetraalkylammoniumhydroxid oder ein Gemisch davon ist.

24. Verfahren nach einem der Ansprüche 20 bis 23, dadurch gekennzeichnet, daß die Konzentration der basischen Lösung im Bereich von in bis 10n liegt.

25. Verfahren nach einem der Ansprüche 1 bis 24, dadurch gekennzeichnet, daß die konzentration des Ceroxids, angegeben als $CeO_2$, 0,3 bis 6 mol/l beträgt.

26. Verfahren nach Anspruch 25, dadurch gekennzeichnet, daß die Konzentration im Bereich von 2 bis 3 mol/l liegt.

27. Verfahren nach einem der Ansprüche 1 bis 26, dadurch gekennzeichnet, daß die Temperatur der Autoklavenbehandlung im Bereich von 100 bis 350°C liegt.

28. Verfahren nach Anspruch 27, dadurch gekennzeichnet, daß die Temperatur im Bereich von 150 bis 350°C liegt.

29. Verfahren nach einem der Ansprüche 1 bis 28, dadurch gekennzeichnet, däß der Druck im Bereich von 1 bis 165 bar ($10^5$ bis $165 \times 10^5$ Pa) liegt.

30. Verfahren nach Anspruch 29, dadurch gekennzeichnet, daß der Druck im Bereich von 5 bis 165 bar ($5 \times 10^5$ Pa bis $165 \times 10^5$ Pa) liegt.

31. Verfahren nach einem der Ansprüche 27 bis 30, dadurch gekennzeichnet, daß die Dauer der Autoklavenbehandlung 30 min bis zu 6 h beträgt.

32. Verfahren nach einem der Ansprüche 1 bis 31, dadurch gekennzeichnet, daß die Brenntemperatur im Bereich von 300 bis 1000°C liegt.

33. Verfahren nach Anspruch 32, dadurch gekennzeichnet, daß die Temperatur im Bereich von 350 bis 800°C liegt.

34. Verfahren nach einem der Ansprüche 32 und 33, dadurch gekennzeichnet, daß die Brenndauer 2 bis 6 h beträgt.

FIG.1